# EUROPEAN PATENT APPLICATION

(11) **EP 4 847 792 A1**
(43) Date of publication of application: **02.12.2026**
(21) Application number: 25197856.5
(22) Date of filing: 25.08.2025
(51) Int. Cl.: F16C 7/00, F16C 27/02, F16C 11/06, F16C 11/08, F16C 11/12

(54) **METHOD FOR IMPROVING SERVICE LIFE OF SPACERS IN MULTI-LAYER ROD END JOINT**

(30) Priority: 29.05.2025 CN 202510709745
(71) Applicant: Zhuzhou Times New Material Technology Co., Ltd, Zhuzhou, Hunan 412007 (CN)
(72) Inventor: Feng, Wansheng, Zhuzhou (CN); Liu, Wensong, Zhuzhou (CN); Tan, Fang, Zhuzhou (CN); Xie, Changwei, Zhuzhou (CN); Huang, Xin, Zhuzhou (CN); Li, Xinglin, Zhuzhou (CN); Wang, Hao, Zhuzhou (CN); Yi, Xing, Zhuzhou (CN); Zhou, Dan, Zhuzhou (CN); Wang, Jinhui, Zhuzhou (CN)
(74) Representative: Zhu, Junyi

(57) **Abstract**

A method for improving service life of spacers in a multi-layer rod end joint is provided, which enhances the radial load-bearing capacity at both ends by increasing the thickness at both ends of an outermost spacer in the direction of an outer sleeve; a starting point A of the thickness increase of the outermost spacer is close to a vertical line between an endpoint of an outward-convex arc S21 at the same end of an inner side wall of the outer sleeve and a spindle axis; and from an axial section, a straight line segment L11 is arranged between point A and an end part of the rod end joint to increase the thickness at both ends of the outermost spacer, and the value range of an angle E between the straight line segment and the spindle axis is 8°≤ E ≤ 18°. The present invention enhances the radial load-bearing capacity at both ends of the spacer by increasing the thickness at both ends from the weak point of the outermost spacer, simultaneously increases the thickness by adopting the straight line segments, controls the inclination angle of the straight line segment, and increases the thickness of the spacers as much as possible under the premise of ensuring the sufficient deflection space, to maximize the radial load-bearing capacity of the spacer.

## Description

### Technical Field

The present invention relates to a method for improving the service life of a rod end joint, and in particular to a method for improving the service life of spacers in a multi-layer rod end joint.

### Background

The rod end joint is a structure at a connection part of vehicle rod elements, and bears complex load conditions such as radial, torsional, and deflection loads in the movement process of a vehicle. For example, when passing through a curve, the vehicle needs to bear torsional and deflection displacement through the deformation of the rod end joint, and simultaneously bear radial loads.

Early rod end joints generally adopt metal joints. However, the metal joints have poor environmental adaptability, and are easy to wear especially in sandy and dusty environments, leading to reduction of the service life of the metal joints and abnormal sound in a use process, thereby increasing the maintenance cost of the vehicle. Therefore, the current rod end joints generally adopt multi-layer rod end rubber joints, such as a series of patents previously applied by the applicant: with application No. of 202110790211X and a title of "a multi-layer rod end spherical hinge and a design method therefor", application No. of 2021107899371 and a title of "a method and structure for reducing the deflection and torsional stiffness of a multi-layer rod end spherical hinge", application No. of 2021107899390 and a title of "a method for improving the tensile resistance of a rubber layer of a rod end spherical hinge", etc. Such rod end joints have the advantages of large deflection and torsional angle deformation capacity, certain radial load-bearing function, no abnormal sound, no wear, no corrosion, no maintenance and long service life.

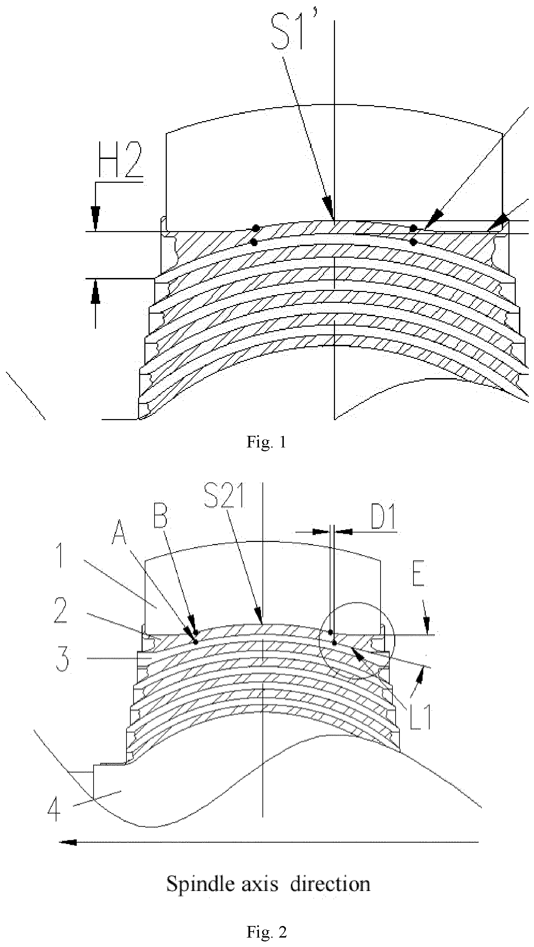

However, the above structure also has problems. As shown in Fig. 1, to ensure the equal strain characteristics of the joints to unify the service life of the joints at each structure as far as possible and satisfy the convenience of die assembly during manufacture, a structure in which spherical spacers with equal thickness are matched with a cylindrical outer sleeve is adopted generally. At the same time, to ensure the deflection characteristics of the joints, from a radial sectional view, the structure of the inner wall of the outer sleeve includes a straight line L1' parallel to a spindle axis at both ends and an outward-convex arc S1' protruding towards the outer sleeve in the middle, with smooth connection between the outward-convex arc S1' and the straight line L1' through an inward-concave arc S2' indented towards a spindle direction. In this way, the rubber thickness at both ends of the outermost layer is uneven. The rubber thickness at a thickest part H2 is more than three times that at a thinnest part H1. Therefore, a region corresponding to the radial outward-convex arc S1' becomes a main load-bearing region. Under the condition that the radial load is large, both ends corresponding to the outer sleeve S1' on an outermost spacer are prone to breakage, which affects the overall service life of the joint.

### Summary

With respect to the problem that the outermost spacer of the current rod end joint is prone to fracture and thus has short service life, the present invention proposes a method for improving the service life of spacers in a multi-layer rod end joint, which can enhance the strength of the outermost spacer, thereby prolonging the service life of the joint.

A technical means adopted to solve the above problems by the present invention is as follows: a method for improving service life of spacers in a multi-layer rod end joint is provided, which enhances the radial load-bearing capacity at both ends by increasing the thickness at both ends of an outermost spacer in the direction of an outer sleeve; a starting point A of the thickness increase of the outermost spacer is close to a vertical line between an endpoint of an outward-convex arc S21 at the same end of an inner side wall of the outer sleeve and a spindle axis; and from an axial section, a straight line segment L11 is arranged between point A and an end part of the rod end joint to increase the thickness at both ends of the outermost spacer, and the value range of an angle E between the straight line segment L11 and the spindle axis is 8°≤ E ≤ 18°.

Further, the distance between the starting point A of the thickness increase of the outermost spacer and the vertical line between the endpoint of the outward-convex arc S21 at the same end of the inner side wall of the outer sleeve and the spindle axis is D1 ≤ 5 mm.

Further, from the axial section, the end part of the outermost spacer close to one side of the outer sleeve is a straight line segment L12 parallel to the spindle axis; the straight line segment L11 and the straight line segment L12 are in smooth connection through an inward-concave arc S13 indented towards a spindle direction; and two endpoints of the inward-concave arc S13 are located on both sides of an inward-concave endpoint of an outermost rubber respectively. While ensuring that the outermost spacer is increased as much as possible, a sufficient deflection space can be reserved without affecting the deflection characteristics of the rod end joint.

Further, from the axial section, the end part of the outermost spacer close to one side of the outer sleeve is still an extension S11' of an outward-convex arc S11 in the middle of the outermost spacer; the straight line segment L11 is connected with the outward-convex arc S11' through the straight line segment L13; at the same time, the straight line segment L11 and the straight line segment L13 are in smooth connection through an outward-convex arc S14 protruding towards the direction of the outer sleeve; the straight line segment L13 and the outward-convex arc S11' are in smooth connection through an inward-concave arc S15 indented towards a spindle direction; and an intersection point between the straight line segment L11 and the outward-convex arc S14 is close to a vertical line between the inward-concave endpoint of the outermost rubber and the spindle axis. The thickness of the outermost spacer at a place where the thickness of the outermost rubber is large is ensured to be increased as much as possible, thereby enhancing the radial load-bearing capacity of the spacer as much as possible.

Further, a distance from the intersection point between the straight line segment L11 and the outward-convex arc S14 to the vertical line between the inward-concave endpoint of the outermost rubber and the spindle axis is D2 ≤ 7 mm.

Further, from the axial section, the outward-convex arc S11 of the outermost spacer close to the middle of one side of the outer sleeve and the straight line segment L11 are in smooth connection through an inward-concave arc S12 indented towards the spindle directionto achieve the angle range of the inclination of the straight line segment L11.

Further, a plurality of reinforcing ribs are arranged along the axial direction of a spindle on one side of the outermost spacer close to the spindle, and a cavity without rubber filling is arranged between each reinforcing rib and the spacer close thereto. The cavity is used for offsetting the stiffness increase caused by the reinforcing ribs.

Further, the number of the reinforcing ribs is 6-10, and the reinforcing ribs are evenly arranged along a circumferential direction.

Further, during vulcanization, the cavity is filled with a filler with a double-layer structure, and after vulcanization is completed, the inner layer structure of the filler is removed to form the cavity.

Further, the filler with the double-layer structure is a high-temperature resistant sealing material wrapped at the periphery of a metal strip, and after vulcanization is completed, the metal strip is removed to form the cavity.

Further, each layer of the spacer is evenly divided into two segments; an opening between two adjacent layers of the spacers is distributed alternately by 60°; during vulcanization, six rubber injection holes are arranged in each rubber layer; a linear rubber injection line is formed among all the rubber injection holes at the same angle of all rubber layers; an angle between two adjacent rubber injection lines is 60°; and the openings of the spacers are located on an angular bisector of the angle between the two adjacent rubber injection lines. Thus, rubber injection at the openings of the spacers is balanced.

The present invention has the following beneficial effects:
1. The present invention enhances the radial load-bearing capacity at both ends of the spacer by increasing the thickness at both ends from the weak point of the outermost spacer, simultaneously increases the thickness by adopting the straight line segments, controls the inclination angle of the straight line segment, and increases the thickness of the spacers as much as possible under the premise of ensuring the sufficient deflection space, to maximize the radial load-bearing capacity of the spacer.
2. The thickness of the main load-bearing region in the middle region of the outermost spacer of the present invention remains unchanged, and only the thickness at both ends is increased. Therefore, the performance requirements of the overall equal stress at the rod end joint can be still ensured; and the load-bearing capacity at both ends is enhanced to reduce the risk of fracture of the outermost spacer at the rubber thickness change, that is, to eliminate the weak point of the spacer.
3. The present invention enhances the strength of the spacer by arranging a plurality of reinforcing ribs on one side of the outermost spacer close to the spindle, and simultaneously arranges the region between the reinforcing ribs and the adjacent spacers as the cavity without rubber filling to offset the stiffness increase brought by the reinforcing ribs, so that the overall radial stiffness of the rod end joint is not affected.
4. In the present invention, during vulcanization, the filler with the double-layer structure is adopted at the cavity, and after vulcanization is completed, the inner layer structure is removed only to form a cavity structure at a long and narrow space.
5. The rubber layers of the present invention adopt six-point rubber injection, and the rubber injection lines are distributed at 60°. Thus, the distances at which the rubber material at both sides flows from the rubber injection points to the openings of the spacers are equal so that the rubber material is filled simultaneously at the openings of the spacers, thereby avoiding adverse phenomena such as product misalignment and uneven thickness of the rubber layers, and ensuring the product performance.

### Description of Drawings

Fig. 1 is an axial sectional view of a rubber condition between an outer sleeve of a rod end joint and an outermost spacer in the prior art (only sectional lines of rubber layers are shown in the figure);
Fig. 2 is an axial sectional view of a rubber condition between an outer sleeve of a rod end joint and an outermost spacer in embodiment 1 (only sectional lines of rubber layers are shown in the figure);
Fig. 3 is a schematic diagram of thickness increase of an outermost spacer at both ends of a joint after local magnification of Fig. 2;
Fig. 4 is a schematic diagram of thickness increase of an outermost spacer at both ends of a joint after local magnification of embodiment 2;
Fig. 5 is a schematic diagram of thickness increase of an outermost spacer at both ends of a joint after local magnification of embodiment 3;
Fig. 6 is a radial sectional view of a spacer and a rubber layer of a rod end joint in embodiment 4;
Fig. 7 is a local amplified schematic diagram of Fig. 6;
Fig. 8 is a schematic diagram of filling at a cavity during vulcanization in Fig. 7;
Fig. 9 is an axial sectional view when an outermost spacer is provided with reinforcing ribs in embodiment 4 (only sectional lines of rubber layers and spacers are shown in the figure);
Fig. 10 is a schematic diagram of filling at a cavity during vulcanization in Fig. 9 (only sectional lines of rubber layers and spacers are shown in the figure);
Fig. 11 is a schematic diagram of a rod end joint along an axial end surface direction in embodiment 5;
Fig. 12 is a local amplified schematic diagram of Fig. 11;

In the figures: 1. outer sleeve; 2. outermost rubber; 3. outermost spacer; 31. reinforcing rib; 32. cavity; 33. filler; 4. spindle; 5. lug boss; 6. spacer; 61. opening; 7. rubber layer; 8. rubber injection hole; 81. rubber injection line;

### Detailed Description

The present invention is further described below in combination with the drawings. Wherein the drawings are only used for exemplary description, are only schematic diagrams rather than physical diagrams, and shall not be understood as a limitation to the present patent. In order to better illustrate the embodiments of the present invention, some components in the drawings may be omitted, scaled up or scaled down, and do not reflect actual product sizes. It should be understandable for those skilled in the art that some well-known structures and description thereof in the drawings may be omitted.

### Embodiment 1

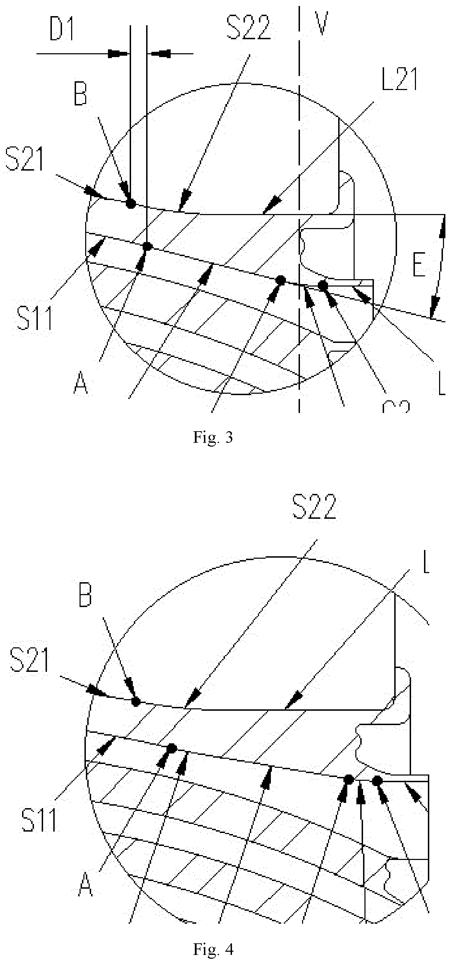

A method for improving service life of spacers in a multi-layer rod end joint is provided, as shown in Fig. 2. The rod end joint comprises an innermost spindle 4, an outermost outer sleeve 1, and a plurality of rubber layers 7 and spacers 6 located between the spindle 4 and the outer sleeve 1. As shown in Fig. 2 and Fig. 3, from an axial section, the endpoints of both ends of an outward-convex arc S21 in the middle of the inner side wall of the outer sleeve 1 are B; both ends of the inner side wall of the outer sleeve 1 are a straight line segment L21; and an inward-concave arc S22 indented towards the direction of a spindle 4 is arranged between the outward-convex arc S21 and the straight line segment L21. The shape of the outermost spacer 3 close to the middle of the side of the outer sleeve 1 is an outward-convex arc S11 protruding towards the direction of the outer sleeve 1.

To enhance the strength of the outermost spacer 3, in the present embodiment, as shown in Fig. 2 and Fig. 3, from the axial section, the length of the outward-convex arc S11 is controlled to point A, the shape of point A close to the end part of the rod end joint is set as smooth connection between the straight line segment L11 and the outward-convex arc S11, and the value range of an angle E between the straight line segment L11 and the spindle axis is controlled as 8°≤ E ≤ 18°, which not only avoids weakening of the deflection load-bearing capacity of the product caused by too small deflection space when E is too small, but also avoids the impossibility of increase in the radial load-bearing capacity caused by too small thickness increase of the outermost spacer 3 when E is too large. At this moment, the straight line segment L11 is tangent to the outward-convex arc S11 at point A, that is, the straight line segment L11 is the tangent of the outward-convex arc S11, and thus the two can be smoothly connected. Moreover, the distance D1 from point A to the vertical line between point B and the spindle axis needs to satisfy: D1 ≤ 5 mm. In this way, the thickness can be increased from the weak point of the outermost spacer 3 to effectively enhance the radial load-bearing capacity.

In the present embodiment, as shown in Fig. 3, from the axial section, the shape of the end part of the outermost spacer 3 close to side of the outer sleeve is set as a straight line segment L12 parallel to the spindle axis; the straight line segment L12 and the straight line segment L11 are in smooth connection through an inward-concave arc S13 indented towards the direction of a spindle 4; moreover, an intersection point C1 between the inward-concave arc S13 and the straight line segment L11, and an intersection point C2 between the inward-concave arc S13 and the straight line segment L12 are located on both sides of the vertical line V between the inward-concave endpoint of the outermost rubber and the spindle axis respectively; a contact surface between the outermost spacer 3 and a position with large rubber thickness of the outermost rubber 2 is a straight line segment L11 with an angle E; the outermost spacer 3 is a structure with a slowly increasing thickness from the middle to both ends within this range; in the same radial direction, the greater the rubber thickness is, the greater the thickness of the outermost spacer 3 is. While ensuring the deflection deformation space, when bearing a radial load, the outer sleeve 1 squeezes the outermost rubber 2, and the deformation amount at both ends of the outermost rubber 2 is also decreased due to the reduction in the rubber thickness. The ability to transfer the load to the outermost spacer 3 is enhanced under the load. Meanwhile, due to the thickness increase of the outermost spacer 3 herein, a greater load can be borne, thereby reducing the load bearing of the outermost spacer 3 at the range of the outermost spacer 3 on the outward-convex arc S11. Therefore, the service life of the outermost spacer 3 can be prolonged.

### Embodiment 2

The present embodiment is almost the same as the above embodiment, and the difference is that: as shown in Fig. 4, from the axial section, the outward- convex arc S11 of the outermost spacer 3 close to the side of the outer sleeve 1 is in smooth connection with the straight line segment L11 through the inward-concave arc S12 indented towards the direction of the spindle 4. This is because, in order to ensure that the angle range of the straight line segment L11 is 8°≤ E ≤ 18°, the straight line segment L11 and the outward-convex arc S11 can be in smooth connection to avoid the smoothness of the outermost rubber 2 on the surface here so that wrinkles or cracks are unlikely to occur. However, if the distance D1 from point A to the vertical line between point B and the spindle axis satisfies a required range, the tangent of the **outward-convex** arc S11 at point A is never able to satisfy the requirement between 8° and 18°. At this moment, the inward-concave arc S12 is needed to connect the straight line segment L11 with the outward-convex arc S11.

### Embodiment 3

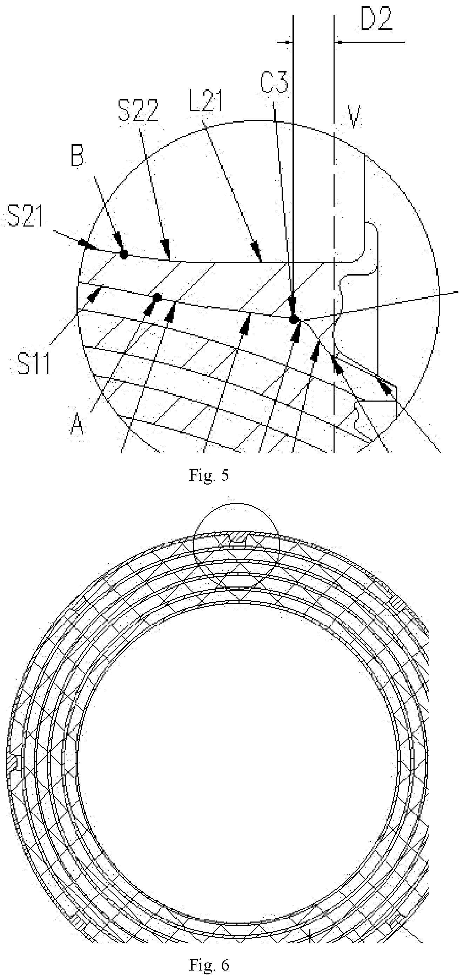

The present embodiment can be either a change made on embodiment 1 or on embodiment 2, as shown in Fig. 5. From the axial section, the end part of the outermost spacer 3 close to the side of the outer sleeve 1 in the present embodiment is still an extended outward-convex arc S11' of the outward-convex arc S11, that is, the center of a circle and the radius of the outward-convex arc S11' are the same as those of the outward-convex arc S11. At this moment, to ensure the smooth connection between the straight line segment L11 and the outward-convex arc S11', a straight line segment L13 is arranged between the straight line segment L11 and the outward-convex arc S11'; the straight line segment L11 and the straight line segment L13 are connected through an outward-convex arc S14 protruding towards the direction of the outer sleeve 1; and the straight line segment L13 and the outward-convex arc S11' are connected through an inward-concave arc S15 indented towards the direction of a spindle 4. In this way, a lug boss 5 is formed in the outward-convex arc S14. Meanwhile, by controlling the position of the intersection point C3 between the straight line segment L11 and the outward-convex arc S14, the position of the lug boss 5 is as close as possible to the end part of the rod end joint, to improve the radial load-bearing capacity of the outermost spacer 3 as much as possible. At this moment, the distance from C3 to the vertical line V between the inward-concave endpoint of the outermost rubber layer and the spindle axis is required to be D2 ≤ 7 mm. Because the outermost rubber 2 corresponding to the outward-convex arc S11' in the same diameter direction is an inward-concave structure, the rubber here basically cannot play the role of transferring the radial load and is mainly used for connection with the outer sleeve 1 and with the outermost spacer 3, as well as for stress release. Therefore, the shape of the outward-convex arc S11' adopted by the outermost spacer 3 basically does not affect the overall load-bearing capacity.

### Embodiment 4

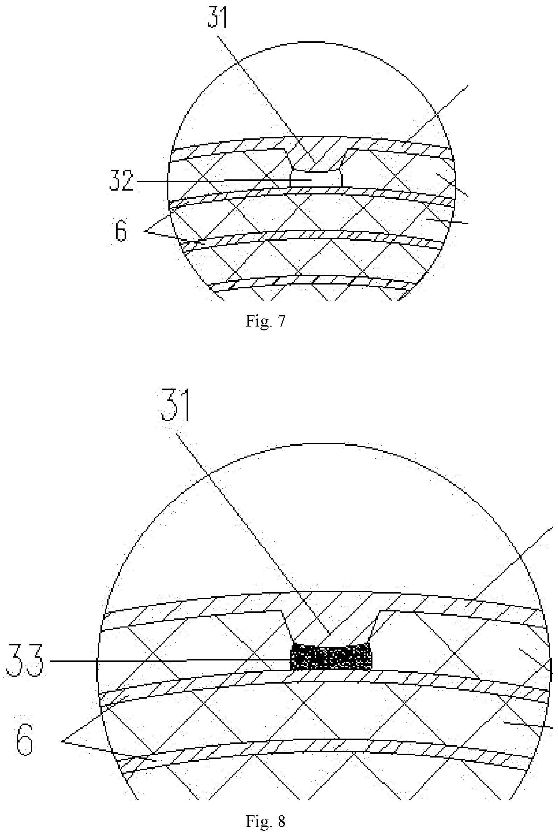

The present embodiment can be an improvement on any of the above embodiments. As shown in Fig. 6 and Fig. 7, a plurality of reinforcing ribs 31 are arranged on a side surface of the outermost spacer 3 facing the spindle 4. The lengths of the reinforcing ribs 31 are arranged along the axial direction of the spindle 4 and evenly distributed along a circumferential direction. The number can be 6-10, which is determined according to the size of the rod end joint and the load-bearing requirements. Although the load-bearing capacity is enhanced by adding the reinforcing ribs 31 to provide support for the outermost spacer 3, the distance from the adjacent spacer 6 is reduced, that is, a compression stroke is decreased. Therefore, a cavity 32 is arranged between the reinforcing ribs 31 and the spacer 6 close thereto. When bearing a radial load, the cavity 32 can fully become a compression space so that the overall performance may not be affected.

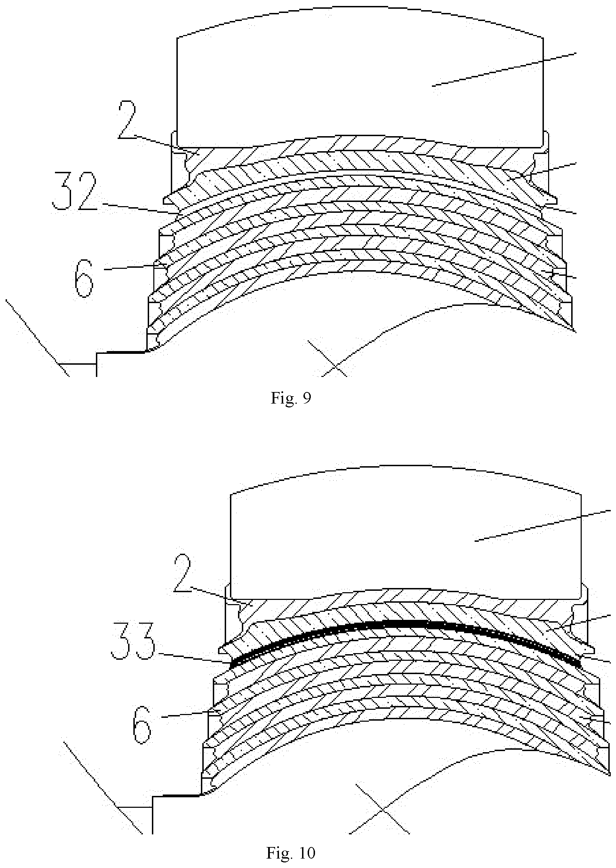

The thickness of the rubber layer 7 in the product is thin, the thickness at the cavity 32 is even smaller, and as shown in Fig. 9, the shape of the cavity 32 is a curved long and narrow strip. Therefore, during vulcanization, if a conventional mold part is used to fill the cavity 32, it is highly likely that the mold part cannot be removed after vulcanization is completed, so that the cavity 32 cannot be formed. To avoid this situation, as shown in Fig. 8 and Fig. 10, a filler 33 at the cavity 32 during vulcanization can be a high-temperature resistant sealing material wrapped outside a long and thin metal strip. The metal strip provides support, and the high-temperature resistant sealing material isolates the rubber from the metal strip. After vulcanization is completed, the metal strip can be pulled out to form the cavity 32, and the high-temperature resistant sealing material can remain in the cavity 32, without affecting the performance. At the same time, the reinforcing ribs 31 and the spacers 6 can also be isolated from the outside to play a protective role.

### Embodiment 5

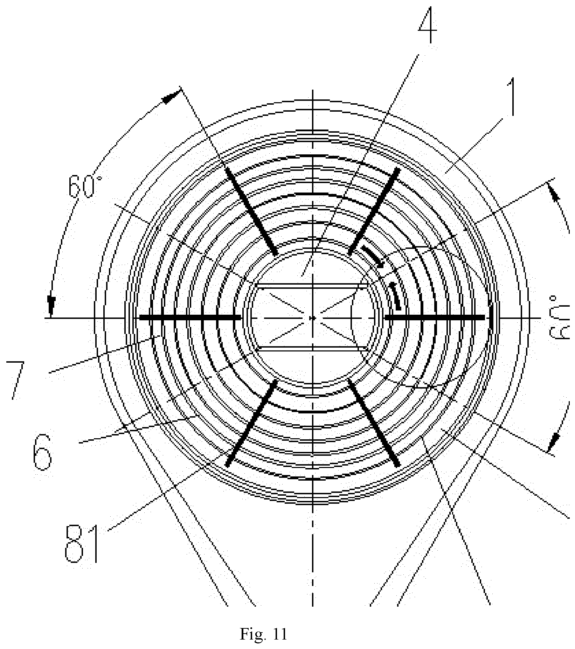

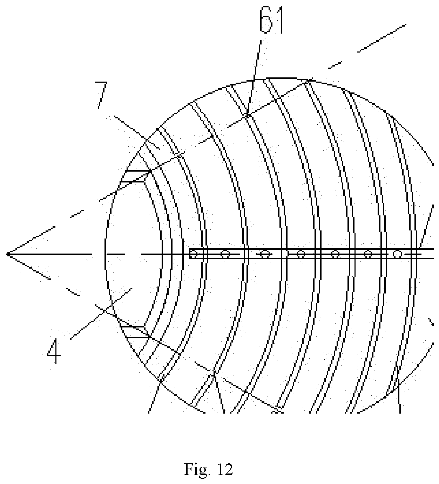

The present embodiment is an improvement on the forming mode of the rod end joint. As shown in Fig. 11 and Fig. 12, each spacer 6 is equally divided into two segments. Two openings 61 are formed between two spacers 6 in the same layer, and the openings 61 between two adjacent layers of spacers 6 are arranged alternately by 60°. During vulcanization, six rubber injection holes 8 are uniformly arranged in each rubber layer 7; a linear rubber injection line 81 is formed among all the rubber injection holes 8 at the same angle of all rubber layers 7; an angle between two adjacent rubber injection lines 81 is 60°; and the openings 61 of the spacers are located on an angular bisector of the angle between the two adjacent rubber injection lines 81. In this way, the distances between one opening 61 and four nearby rubber injection holes 8 are basically equal. During vulcanization, the rubber material at the four nearby rubber injection holes 8 can basically reach the same opening 61 at the same time, so that the rubber material is filled simultaneously at the opening 61 to achieve a balanced rubber injection state, thereby avoiding phenomena such as misalignment or uneven thickness of the rubber layers at the opening 61.

### Embodiment 6

In the present embodiment, a relationship among the radial ultimate fatigue load F borne by the product (wherein the fatigue frequency is 2 million times), the thickness H of the outer sleeve 1 and the width L of the outer sleeve 1 is: F=2.35L+4.15H-84, defining L ≥ 28 mm and H ≥ 7 mm, so that the formed rod end joint can not only satisfy the requirements of the assembly space, but also avoid excessive deformation of the outer sleeve 1 during load bearing.

The above embodiments are merely used for illustration of the present invention, and not intended to limit the present invention. Various changes or transformations can also be made by those skilled in the art without departing from the spirit and the scope of the present invention. Therefore, all equivalent technical solutions shall also belong to the protection scope of the present invention, and the protection scope of the present invention shall be defined by the claims.

## Claims

1. A method for improving service life of spacers in a multi-layer rod end joint, **characterized in that**: which enhances the radial load-bearing capacity at both ends by increasing the thickness at both ends of an outermost spacer (3) in the direction of an outer sleeve (1); a starting point A of the thickness increase of the outermost spacer (3) is close to a vertical line between an endpoint of an outward-convex arc S21 at the same end of an inner side wall of the outer sleeve (1) and a spindle (4) axis; and from an axial section, a straight line segment L11 is arranged between point A and an end part of the rod end joint to increase the thickness at both ends of the outermost spacer (3), and the value range of an angle E between the straight line segment L11 and the spindle (4) axis is 8°≤ E ≤ 18°.

2. The method for improving service life of spacers in a multi-layer rod end joint according to claim 1, **characterized in that**: the distance between the starting point A of the thickness increase of the outermost spacer (3) and the vertical line between the endpoint of the outward-convex arc S21 at the same end of the inner side wall of the outer sleeve (1) and the spindle (4) axis is D1 ≤ 5 mm.

3. The method for improving service life of spacers in a multi-layer rod end joint according to claim 1, **characterized in that**: from the axial section, the end part of the outermost spacer (3) close to one side of the outer sleeve (1) is a straight line segment L12 parallel to the spindle (4) axis; the straight line segment L11 and the straight line segment L12 are in smooth connection through an inward-concave arc S13 indented towards a spindle (4) direction; and two endpoints of the inward-concave arc S13 are located on both sides of an inward-concave endpoint of an outermost rubber (2) respectively.

4. The method for improving service life of spacers in a multi-layer rod end joint according to claim 1, **characterized in that**: from the axial section, the end part of the outermost spacer (3) close to one side of the outer sleeve (1) is still an extension S11' of an outward-convex arc S11 in the middle of the outermost spacer (3); the straight line segment L11 is connected with the outward-convex arc S11' through the straight line segment L13; at the same time, the straight line segment L11 and the straight line segment L13 are in smooth connection through an outward-convex arc S14 protruding towards the direction of the outer sleeve (1); the straight line segment L13 and the outward-convex arc S11' are in smooth connection through an inward-concave arc S15 indented towards a spindle direction; and an intersection point between the straight line segment L11 and the outward-convex arc S14 is close to a vertical line between the inward-concave endpoint of the outermost rubber and the spindle (4) axis.

5. The method for improving service life of spacers in a multi-layer rod end joint according to claim 4, **characterized in that**: a distance from the intersection point between the straight line segment L11 and the outward-convex arc S14 to the vertical line between the inward-concave endpoint of the outermost rubber (2) and the spindle (4) axis is D2 ≤ 7 mm.

6. The method for improving service life of spacers in a multi-layer rod end joint according to claim 3 or claim 4, **characterized in that**: from the axial section, the outward-convex arc S11 of the outermost spacer (3) close to the middle of one side of the outer sleeve (1) and the straight line segment L11 are in smooth connection through an inward-concave arc S12 indented towards the spindle direction to achieve the angle range of the inclination of the straight line segment L11.

7. The method for improving service life of spacers in a multi-layer rod end joint according to claim 1, **characterized in that**: a plurality of reinforcing ribs are arranged along the axial direction of a spindle (4) on one side of the outermost spacer (3) close to the spindle (4), and a cavity (32) without rubber filling is arranged between each reinforcing rib (31) and the spacer (6) close thereto.

8. The method for improving service life of spacers in a multi-layer rod end joint according to claim 7, **characterized in that**: during vulcanization, the cavity (32) is filled with a filler (33) with a double-layer structure, and after vulcanization is completed, the inner layer structure of the filler (33) is removed to form the cavity (32).

9. The method for improving service life of spacers in a multi-layer rod end joint according to claim 8, **characterized in that**: the filler with the double-layer structure is a high-temperature resistant sealing material wrapped at the periphery of a metal strip, and after vulcanization is completed, the metal strip is removed to form the cavity (33).

10. The method for improving service life of spacers in a multi-layer rod end joint according to claim 4, **characterized in that**: each layer of the spacer (6) is evenly divided into two segments; an opening (61) between two adjacent layers of the spacers (6) is distributed alternately by 60°; during vulcanization, six rubber injection holes (8) are arranged in each rubber layer (7); a linear rubber injection line (81) is formed among all the rubber injection holes (8) at the same angle of all rubber layers (7); an angle between two adjacent rubber injection lines is 60°; and the openings of the spacers (6) are located on an angular bisector of the angle between the two adjacent rubber injection lines (81).
